# EUROPÄISCHE PATENTSCHRIFT

(11) **EP 0 829 190 B1**
(45) Veröffentlichungstag und Bekanntmachung des Hinweises auf die Patenterteilung: **21.10.1998**
(21) Anmeldenummer: 96916170.2
(22) Anmeldetag: 30.05.1996
(51) Int. Cl.: H05K 7/18, H02B 1/01

(54) **SCHALTSCHRANK MIT RAHMENGESTELL UND WANDELEMENTEN**
SWITCHING CABINET WITH FRAME AND WALL ELEMENTS
ARMOIRE DE DISTRIBUTION AVEC UNE OSSATURE ET DES ELEMENTS FORMANT DES PAROIS

(30) Priorität: 01.06.1995 DE 19520084
(43) Veröffentlichungstag der Anmeldung: 18.03.1998
(73) Patentinhaber: Rittal-Werk Rudolf Loh GmbH & Co. KG, 35745 Herborn (DE)
(72) Erfinder: BENNER, Rolf, D-35745 Herborn (DE); WINKEL, Roland, D-35745 Herborn (DE)
(74) Vertreter: Fleck, Hermann-Josef, Dr.-Ing.
(86) Internationale Anmeldenummer: EP9602315
(87) Internationale Veröffentlichungsnummer: WO9639015

(56) Entgegenhaltungen:
- CH-B- 348 192
- DE-C- 4 439 622

## Beschreibung

Die Erfindung betrifft einen Schaltschrank mit einem aus Rahmenschenkeln zusammengesetzten Rahmengestell, dessen offene Seiten zumindest teilweise mit Wandelementen verschließbar sind, wobei die Wandelemente an den Rahmenschenkeln des Rahmengestelles befestigbar sind, vgl. z.B. CH-B-348192.

Bei den bekannten Schaltschränken dieser Art werden die Wandelemente in der Regel direkt mit den Rahmenschenkeln des Rahmengestelles verschraubt. Dabei können die Rahmenschenkel zurückgesetzte Befestigungsflansche mit Befestigungsbohrungen tragen. Bei dieser Befestigungsart sind die Befestigungsstellen auf der Außenseite einsehbar, zumindest was die dafür verwendeten Befestigungsschrauben betrifft. Außerdem muß das Wandelement an den richtigen Stellen mit Befestigungsbohrungen versehen sein.

Es ist Aufgabe der Erfindung, bei einem Schaltschrank der eingangs erwähnten Art die Anbringung eines Wandelementes an dem Rahmengestell auf einfache Weise so zu lösen, daß das Wandelement auf der Außenseite vollständig geschlossen sein kann und die Befestigungsstellen von außen her gar nicht erkennbar und einsehbar sind.

Diese Aufgabe wird nach der Erfindung durch die im Kennzeichnenden Teil des Anspruchs 1 beanspruchten Merkmale gelöst.

Die Hakenelemente und Gegenhakenelemente bilden Befestigungsstellen, die nur einfache Bauteile erfordern. Die Befestigungsstellen werden beim Anbringen der Gegenhakenelemente an den Rahmenschenkeln automatisch hergestellt. Das Gegenhakenelement wird in das fest an dem Wandelement befestigten Hakenelement eingehängt und dann am Rahmenschenkel festgeschraubt. Die Montage ist sehr einfach durchführbar.

Ist dabei vorgesehen, daß die Gegenhakenelemente senkrecht zum Wandelement verstellbar am Rahmenschenkel anbringbar sind, dann kann das Wandelement am Rahmengestell festgezogen werden.

Gemäß der Erfindung ist vorgesehen, daß die Hakenelemente als Winkel ausgebildet sind, dessen einer Schenkel fest mit dem Wandelement verbunden ist und dessen anderer Schenkel am Wandelement absteht und am freien Ende in einen hakenförmig eingebogenen Endabschnitt ausläuft. Diese Ausgestaltung des Hakenelementes ist unabhängig von der Ausgestaltung und Anbringung des Gegenhakenelementes am Rahmengestell und bietet eine breite Einhängemöglichkeit für das Gegenhakenelement. Damit kann die Festlegung des Gegenhakenelementes am Rahmengestell in gewissen Grenzen tolerieren.

Die Ausbildung des Gegenhakenelementes richtet sich nach der Ausrichtung der Befestigungsfläche am Rahmengestell. So kann nach einer Ausgestaltung vorgesehen sein, daß das Gegenhakenelement als Befestigungsplatte ausgebildet ist, die an einer Seite in einen hakenförmig eingebogenen Gegenendabschnitt übergeht, und daß die Befestigungsplatte an einer zum Wandelement parallelen Befestigungsfläche des Rahmenschenkels anschraubbar ist, wobei der Gegenendabschnitt am Rahmenschenkel zum Einführen des Endabschnittes des Hakenelementes absteht, oder daß das Gegenhakenelement als Winkel ausgebildet ist, das mit einem Schenkel an einer senkrecht zum Wandelement stehenden Befestigungsfläche des Rahmenschenkels anschraubbar ist und mit dem anderen Schenkel parallel zum Wandelement am Rahmenschenkel absteht, daß der parallel zum Wandelement abstehende Schenkel in einen hakenförmig eingebogenen Endabschnitt übergeht, in den der Endabschnitt des Hakenelementes einführbar ist.

Eine verstellbare Ausgestaltung ist dadurch gekennzeichnet, daß das Gegenhakenelement als Bügel ausgebildet ist, dessen Seitenschenkel an den Enden als Haken ausgebildet sind, in die der Endabschnitt des Hakenelementes einführbar ist, daß im Bügel eine Stellschraube unverlierbar gehalten ist, mit der ein zwischen den Seitenschenkeln geführter Befestigungsblock mit Gewindebohrung für die Stellschraube verstellbar ist, und daß der Befestigungsblock sich an einer parallel zum Wandelement verlaufenden Befestigungsfläche abstützt oder mit einem Teil in eine Befestigungsaufnahme einer senkrecht zum Wandelement stehenden Befestigungsfläche des Rahmenschenkels oder einer mit dem Rahmenschenkel verbundenen Montageschiene eingeführt ist.

Die Abstützung des Befestigungsblockes am Rahmengestell kann dabei so ausgeführt sein, daß der Befestigungsblock mit Fixierstiften versehen ist, die in Befestigungsbohrungen der parallel zum Wandelement verlaufenden Befestigungsfläche des Rahmenschenkels oder einer mit dem Rahmenschenkel verbundenen Montageschiene einführbar sind, oder daß der Befestigungsblock einen Hakenansatz trägt, der die Befestigungsaufnahme des Rahmenschenkels oder einer mit dem Rahmenschenkel verbundenen Montageschiene auf der dem Wandelement abgekehrten Seite hintergreift.

Diese Befestigungsart von Wandelementen kann auch bei einem Schaltschrank eingesetzt werden, bei dem zumindest ein Teil der offene Seiten begrenzenden Rahmenschenkel an dem anschließenden Wandelement abgekantet sind.

Die Erfindung wird anhand von in den Zeichnungen dargestellten Ausführungsbeispielen näher erläutert. Es zeigen:
- Fig. 1: in Explosionsdarstellung eine Befestigungsstelle zwischen Wandelement und Rahmenschenkel,
- Fig. 2: die Befestigungsstelle nach Fig. 1 in der ausgeführten Endstellung,
- Fig. 3: in Explosionsdarstellung eine Befestigungsstelle mit einem verstellbaren Gegenhakenelement und
- Fig. 4: eine der Fig. 3 entsprechende Darstellung mit anderer Anbringung des verstellbaren Gegenhakenelementes an einer mit dem Rahmenschenkel verbundenen Montageschiene.

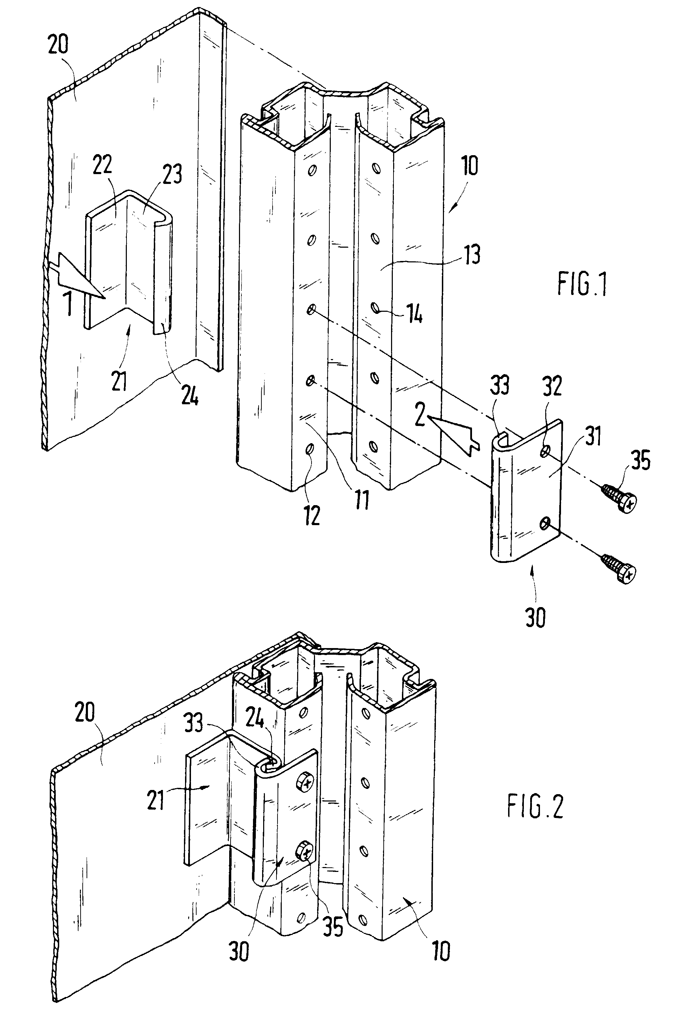

Die Teilansicht nach Fig. 1 zeigt einen Teil eines an den Seiten mit abgekantetem Rand versehenen Wandelementes 20 sowie einen zugekehrten Abschnitt eines Rahmenschenkels 10 eines Rahmengestelles eines Schaltschrankes. Dabei kann es sich um einen vertikal oder horizontal ausgerichteten Rahmenschenkel 10 des Rahmengestelles handeln.

Auf der Innenseite des Wandelementes 20 sind an den vorgesehenen Befestigungsstellen Hakenelemente 21 fest angebracht, die im Ausführungsbeispiel als Winkel ausgebildet sind. Mit einem Schenkel 22 sind die Hakenelemente 21 fest mit dem Wandelement 20 verbunden. Der andere Schenkel 23 steht senkrecht am Wandelement 20 ab und ist parallel zur Längsrichtung des Rahmenschenkels 10 ausgerichtet. Am freien Ende ist der Schenkel 23 hakenförmig eingebogen, wie der Endabschnitt 24 erkennen läßt.

Im Ausführungsbeispiel ist für den Rahmenschenkel 10 ein offenes Hohlprofil verwendet, das im Bereich der Innenkante in die senkrecht zueinander stehenden Befestigungsflächen (Profilseiten) 11 und 13 mit Befestigungsbohrungen 12 und 13 aufweist. Als Gegenhakenelement 30 wird eine Befestigungsplatte 31 mit Befestigungsbohrungen 32 verwendet, die mittels Schrauben 35 an der Befestigungsbohrungen 12 an der Befestigungsfläche 11 des Rahmenschenkels 10 angeschraubt wird. Die Rückwand 20 wird, wie mit 1 gekennzeichnet ist, an dem Rahmenschenkel 10 angelegt. Dann wird die Befestigungsplatte 31 mit dem an einer Kante hakenförmig eingebogenen Endabschnitt 33 am Endabschnitt 24 des Hakenelementes 21 eingehängt und am Rahmenschenkel 10 festgeschraubt, wie mit 2 zu erkennen gegeben ist. Dabei ist die Auslegung so, daß die Befestigungsplatte 31 mit dem Endabschnitt 33 so weit über die Befestigungsfläche 11 vorsteht, daß die Hakenverbindung Platz findet, wieder Fig. 2 zu entnehmen ist. Die Hakenverbindung hat eine ausreichende Breite, so daß auch Toleranzen in Längsrichtung des Rahmenschenkels 10 ausgeglichen werden können. Der Schenkel 23 des Hakenelementes 21 kann bei der hergestellten Verbindung sich am Rahmenschenkel 10 abstützen, so daß auch in der Ebene des Wandelementes 20 eine eindeutige Positionierung des Wandelementes 20 erreicht werden kann.

Bei unverändertem Wandelement 20 mit Hakenelementen 21 kann am Rahmenschenkel 10 auch ein als Winkel ausgebildetes Gegenhakenelement 30 verwendet werden. Die Befestigungsplatte 31 geht dann in einen senkrecht dazu stehenden Schenkel über, mit dem das Gegenhakenelement 30 an der Befestigungsfläche 13 des Rahmenschenkels 10 festgeschraubt werden kann, die senkrecht zum Wandelement 20 steht. Die Befestigungsplatte 31 stützt sich dabei auf der Befestigungsfläche 11 des Rahmenschenkels 10 ab.

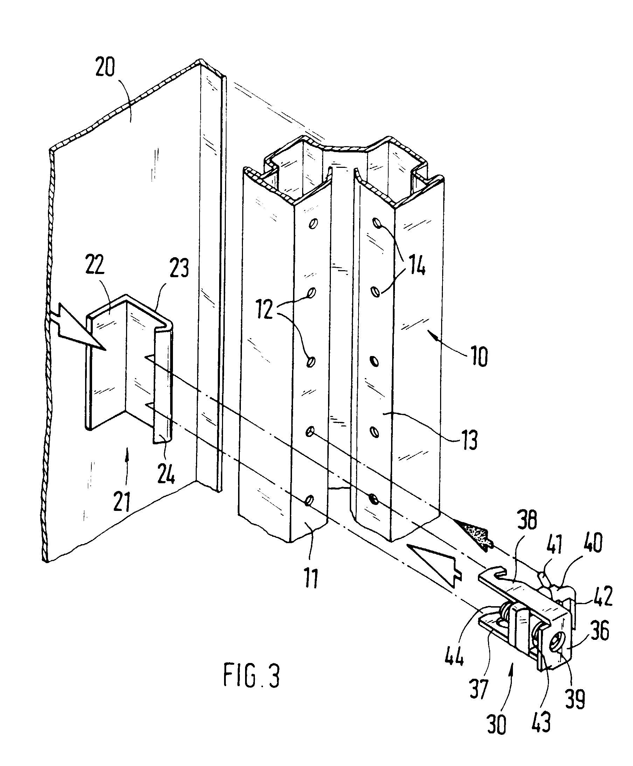

Bei dem in Fig. 3 dargestellten Ausführungsbeispiel bleibt das Wandelement 20 wieder unverändert. Das bügelförmig ausgebildete Gegenhakenelement 30 erlaubt jedoch eine Verstellung und damit ein Festziehen des Wandelementes 20 am Rahmenschenkel 10. Das Gegenhakenelement 30 hat im Basisschenkel 36 eine Bohrung 39, die Zugang zu einer im Bügel unverlierbar gehaltenen Stellschraube 44 bietet. Am Basisschenkel 36 stehen die beiden Seitenschenkel 37 und 38 ab, die an den Enden als Haken zur Aufnahme der Endabschnitte 24 des Hakenelementes 21 ausgebildet sind. Zwischen den Seitenschenkeln 37 und 38 ist ein Befestigungsblock 40 verstellbar geführt. Die Verstellung des Befestigungsblockes 40 erfolgt über die Stellschraube 44, die in eine Gewindebohrung 43 des Befestigungsblockes 40 eingeschraubt ist. Der Befestigungsblock 40 ist mit Fixierstiften 41 versehen, die in Befestigungsbohrungen 12 der parallel zum Wandelement 20 verlaufenden Befestigungsfläche 11 des Rahmenschenkels 10 einführbar sind, so daß der Befestigungsblock 40 eindeutig auf der Befestigungsfläche 10 abstützt. Durch Verstellung der Stellschraube 44 wird das als Bügel ausgebildete Gegenhakenelement 30 senkrecht zum Wandelement 20 verstellt und festgezogen. Der Befestigungsblock 40 ragt seitlich aus den Seitenschenkeln 37 und 38, so daß der Bügel Platz neben dem Rahmenschenkel 10 findet.

Nach dem Lösen der Stellschraube kann die Hakenverbindung wieder aufgehoben und das Wandelement 20 wieder abgenommen werden. Das Gegenhakenelement 30 mit dem Befestigungsblock 40 bildet eine abnehmbare und ansetzbare Einheit.

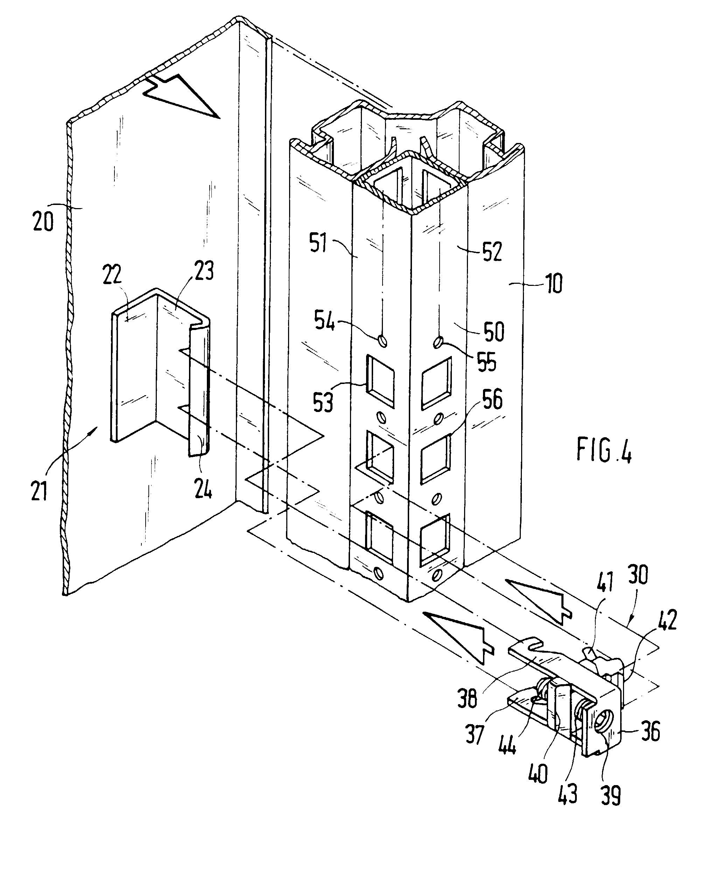

Das Ausführungsbeispiel nach Fig. 4 unterscheidet sich nur durch die Anbringung des Gegenhakenelementes 30. Das Wandelement 20 und das verstellbare, bügelförmige Gegenhakenelement 30 bleiben unverändert. Die Befestigungsflächen 11 und 13 des Rahmenschenkels 10 bilden eine Aufnahme, in die eine im wesentlichen quadratische und C-förmige Montageschiene 50 bündig eingesetzt ist. Die Profilseiten der Montageschiene 50 sind mit einer Reihe von Befestigungsaufnahmen 53 bzw. 56 mit dazwischenliegenden Befestigungsbohrungen 54 bzw. 55 versehen.

Die Abstützung des Befestigungsblockes 40 kann unter Einführung der Fixierstifte 41 in Bohrungen 55 der Profilseite 52 oder auch durch Einführen eines Hakenansatzes 42 in eine Befestigungsaufnahme 53 der Profilseite 51 an der Montageschiene 50 erfolgen. Der Hakenansatz 42 hintergreift dabei die dem Wandelement 20 abgekehrte Seite der Befestigungsaufnahme 53. Das Spannen und Lösen erfolgt wie beim Ausführungsbeispiel nach Fig. 3 durch entsprechende Verdrehung der Stellschraube 44.

## Patentansprüche

1. Schaltschrank mit einem aus Rahmenschenkeln (10) zusammengesetzten Rahmengestell, dessen offene Seiten zumindest teilweise mit Wandelementen (20) verschließbar sind, wobei die Wandelemente an den Rahmenschenkeln des
Rahmengestelles befestigbar sind, wobei
auf den Innenseiten der Wandelemente (20) abstehende Hakenelemente (21) fest angebracht sind, wobei
in diese Hakenelemente Gegenhakenelemente (30) einhängbar sind, und wobei
diese Gegenhakenelemente an den Rahmenschenkeln so anbringbar sind, daß die Hakenelemente einhängbar sind,
dadurch gekennzeichnet,
daß die Hakenelemente (21) als Winkel ausgebildet sind, dessen einer Schenkel (22) fest mit dem Wandelement (20) verbunden ist und dessen anderer Schenkel (23) am Wandelement (20) absteht und am freien Ende in einen hakenförmig eingebogenen Endabschnitt (24) ausläuft.

2. Schaltschrank nach Anspruch 1,
dadurch gekennzeichnet,
daß die Gegenhakenelemente (30) senkrecht zum Wandelement (20) verstellbar am Rahmenschenkel (10) anbringbar sind.

3. Schaltschrank nach Anspruch 1 oder 2,
dadurch gekennzeichnet,
daß das Gegenhakenelement (30) als Befestigungsplatte (31) ausgebildet ist, die an einer Seite in einen hakenförmig eingebogenen Gegenendabschnitt (33) übergeht, und
daß die Befestigungsplatte (31) an einer zum Wandelement (20) parallelen Befestigungsfläche (11) des Rahmenschenkels (10) anschraubbar ist, wobei der Gegenendabschnitt (33) am Rahmenschenkel (10) zum Einführen des Endabschnittes (24) des Hakenelementes (21) absteht.

4. Schaltschrank nach Anspruch 1 oder 2,
dadurch gekennzeichnet,
daß das Gegenhakenelement (30) als Winkel ausgebildet ist, das mit einem Schenkel an einer senkrecht zum Wandelement (20) stehenden Befestigungsfläche (13) des Rahmenschenkels (10) anschraubbar ist und mit dem anderen Schenkel parallel zum Wandelement (20) am Rahmenschenkel (10) absteht, daß der parallel zum Wandelement (20) abstehende Schenkel in einen hakenförmig eingebogenen Endabschnitt (33) übergeht, in den der Endabschnitt (24) des Hakenelementes (21) einführbar ist.

5. Schaltschrank nach Anspruch 1 oder 2,
dadurch gekennzeichnet,
daß das Gegenhakenelement (30) als Bügel ausgebildet ist, dessen Seitenschenkel (37,38) an den Enden als Haken ausgebildet sind, in die der Endabschnitt (24) des Hakenelementes (21) einführbar ist,
daß im Bügel eine Stellschraube (44) unverlierbar gehalten ist, mit der ein zwischen den Seitenschenkeln (37,38) geführter Befestigungsblock (40) mit Gewindebohrung (43) für die Stellschraube (44) verstellbar ist, und
daß der Befestigungsblock (40) sich an einer parallel zum Wandelement (20) verlaufenden Befestigungsfläche (11) abstützt oder mit einem Teil (42) in eine Befestigungsaufnahme (53) einer senkrecht zum Wandelement (20) stehenden Befestigungsfläche (51) des Rahmenschenkels (10) oder einer mit dem Rahmenschenkel (10) verbundenen Montageschiene (50) eingeführt ist.

6. Schaltschrank nach Anspruch 5,
dadurch gekennzeichnet,
daß der Befestigungsblock (40) mit Fixierstiften (41) versehen ist, die in Befestigungsbohrungen (12,55) der parallel zum Wandelement (20) verlaufenden Befestigungsfläche (11,52) des Rahmenschenkels (10) oder einer mit dem Rahmenschenkel (10) verbundenen Montageschiene (50) einführbar sind.

7. Schaltschrank nach Anspruch 5
dadurch gekennzeichnet,
daß der Befestigungsblock (40) einen Hakenansatz (42) trägt, der die Befestigungsaufnahme (53) des Rahmenschenkels (10) oder einer mit dem Rahmenschenkel (10) verbundenen Montageschiene (50) auf der dem Wandelement (20) abgekehrten Seite hintergreift.

8. Schaltschrank nach einem der Ansprüche 1 bis 7,
dadurch gekennzeichnet,
daß zumindest ein Teil der offene Seiten begrenzenden Rahmenschenkel an dem anschließenden Wandelement abgekantet sind.

## Claims

1. Switchgear cabinet, including a framework comprising frame members (10), the open sides of said framework being closable at least partially by wall members (20), the wall members being securable on the frame members of the framework, protruding hook-like members (21) being securedly mounted on the internal surfaces of the wall members (20), counter-hook members (30) being engageable with these hook-like members, and these counter-hook members being so mountable on the frame members that the hook-like members are engageable therewith, characterised in that the hook-like members (21) are configured as an angle bracket, one arm (22) of which is securedly connected to the wall member (20), and the other arm (23) of which protrudes beyond the wall member (20) and extends at the free end into an end portion (24), which is bent into a hook-like configuration.

2. Switchgear cabinet according to claim 1, characterised in that the counter-hook members (30) are mountable on the frame member (10) so as to be adjustable perpendicular to the wall member (20).

3. Switchgear cabinet according to claim 1 or 2, characterised in that the counter-hook member (30) is configured as securing plate (31), which extends at one side into a counter-end portion (33), which is bent into a hook-like configuration, and in that the securing plate (31) is screw-connectable to a securing face (11) of the frame member (10) parallel t.o the wall member (20), the counter-end portion (33) protruding beyond the frame member (10) for the insertion of the end portion (24) of the hook-like member (21).

4. Switchgear cabinet according to claim 1 or 2, characterised in that the counter-hook member (30) is configured as an angle bracket, which is screw-connectable, by one arm, to a securing face (13) of the frame member (10), which face is perpendicular to the wall member (20), and said angle bracket protrudes with the other arm parallel to the wall member (20) beyond the frame member (10), and in that the arm which protrudes parallel to the wall member (20) extends into an end portion (33), which is bent into a hook-like configuration, and in which the end portion (24) of the hook-like member (21) is insertable.

5. Switchgear cabinet according to claim 1 or 2, characterised in that the counter-hook member (30) is configured as a clamp, the lateral arms (37,38) of which are configured at the ends as hooks, in which the end portion (24) of the hook-like member (21) is insertable, in that a setscrew (44) is non-detachably retained in the clamp, by means of which setscrew a securing block (40), which is guided between the lateral arms (37,38) and has threaded bore (43) for the setscrew (44), is adjustable, and in that the securing block (40) is supported on a securing face (11), which extends parallel to the wall member (20), or said block is inserted, by a part (42), in a securing receiver (53) of a securing face (51) of the frame member (10), which face lies perpendicular to the wall member (20), or of a mounting bar (50) connected to the frame member (10).

6. Switchgear cabinet according to claim 5, characterised in that the securing block (40) is provided with fixing pins (41), which are insertable in securing bores (12,55) of the securing face (11,52) of the frame member (10), which face extends parallel to the wall member (20), or of a mounting bar (50) connected to the frame member (10).

7. Switchgear cabinet according to claim 5, characterised in that the securing block (40) carries a hook extension (42), which engages behind the securing receiver (53) of the frame member (10) or of a mounting bar (50), which is connected to the frame member (10), on the side remote from the wall member (20).

8. Switchgear cabinet according to one of claims 1 to 7, characterised in that at least some of the frame members defining open sides are chamfered at the communicating wall member.

## Revendications

1. Armoire de distribution avec une ossature constituée par des montants d'encadrement (10), ossature dont les côtés ouverts peuvent au moins partiellement être clôturés-par des éléments de paroi, où les éléments de paroi (20) peuvent être fixés aux montants d'encadrement de l'ossature, où
des éléments de crochet (81) sont montés de manière fixe sur les faces intérieures des éléments de paroi, où
des éléments de crochet antagonistes (30) peuvent être accrochés à des éléments de crochet (21), et où
ces éléments de crochet antagonistes (30) peuvent être fixés aux montants d'encadrement de manière telle que les éléments de crochet peuvent être accrochés,
caractérisée
en ce que les éléments de crochet (21) sont en forme de cornière, dont l'une des ailes (22) est solidarisée avec l'élément de paroi (20) et dont l'autre aile (23) est issue de l'élément de paroi (20) et se termine à son extrémité libre par un tronçon terminal (24) cintré vers l'intérieur en forme de crochet.

2. Armoire de distribution suivant la revendication 1,
caractérisée
en ce que les éléments de crochet antagonistes (30) peuvent être montés perpendiculairement et de manière réglable sur l'aile d'encadrement (10).

3. Armoire de distribution suivant la revendication 1 ou 2,
caractérisée
en ce que l'élément de crochet antagoniste (30) a la forme d'une plaque de fixation (31), qui d'un côté se termine par un tronçon terminal (33) cintré vers l'intérieur en forme de crochet, et
en ce que la plaque de fixation (31) peut être fixée par vis à une surface de fixation (11), parallèles l'élément de paroi (20), du montant d'encadrement (10), où le tronçon terminal (33) fait protubérance sur le montant d'encadrement (10), aux fins de l'introduction du tronçon terminal (24) de l'élément de crochet.

4. Armoire de distribution suivant la revendication 1 ou 2,
caractérisée
en ce que l'élément de crochet antagoniste (30) est en forme de cornière qui par une aile peut être fixée par vis à une surface de fixation (13), perpendiculaire à l'élément de paroi (20), du montant d'encadrement (10) et dont l'autre aile fait protubérance parallèlement à l'élément de paroi (20) sur le montant d'encadrement (10),
en ce que l'aile qui fait protubérance parallèlement à l'élément de paroi (20) se termine par un tronçon terminal (33) cintré vers l'intérieur en forme de crochet, tronçon terminal dans lequel peut s'engager le tronçon terminal (24) de l'élément de crochet (21).

5. Armoire de distribution suivant la revendication 1 ou 2,
caractérisée
en ce que l'élément de crochet antagoniste (30) est en forme d'étrier, dont les ailes latérales (37, 38) sont, aux extrémités, en forme de crochet, dans lequel peut d'engager le tronçon terminal (24) de l'élément de crochet (21),
en ce que dans l'étrier est retenue, à l'abri de la perte, une vis de réglage (44) au moyen de laquelle peut être déplacé -de manière réglable un bloc de fixation (40) guidé entre les ailes latérales (37, 38), bloc présentant une forure filetée (43) pour la vis de réglage (44), et
en ce que le bloc de fixation (40) s'appuie sur une surface de fixation (11) disposée parallèlement à l'élément de paroi (20) ou bien est par une portion (42) est introduit dans un logement de fixation (53) d'une surface de fixation (51) perpendiculaire à l'élément de paroi (20) du montant d'encadrement (10) ou bien est introduit dans un logement de fixation d'un rail de montage (50) relié au montant d'encadrement 10).

6. Armoire de distribution suivant la revendication 5,
caractérisée
en ce que le bloc de fixation (40) est doté de broches de fixation (41), qui peuvent être introduites dans des forures de fixation (12, 55) de la surface de fixation (11, 52) disposée parallèlement à l'élément de paroi (20) du montant d'encadrement (10) ou d'un rail de montage (50) relié au montant d'encadrement (10).

7. Armoire de distribution suivant la revendication 5,
caractérisée
en ce que le bloc de fixation (40) porte un épaulement de crochet (42), qui s'engage derrière le logement de fixation (53) du montant d'encadrement (10) ou d'un rail de montage (50) relié au montant d'encadrement (10) du côté opposé à l'élément de paroi (10).

8. Armoire de distribution suivant l'une quelconque des revendications de 1 à 7,
caractérisée
en ce qu'au moins une partie des montants d'encadrement délimitant les côtés ouverts sont coudés sur l'élément de paroi raccordé.
